# EUROPEAN PATENT APPLICATION

(11) **EP 1 878 339 A2**
(43) Date of publication of application: **16.01.2008**
(21) Application number: 07100510.2
(22) Date of filing: 15.01.2007
(51) Int. Cl.: A01K 1/02, A01K 31/07

(54) **Carrier for birds and small animals**

(30) Priority: 13.07.2006 IT MO20060228
(71) Applicant: 2 GR di Gobbi Luciano & C. S.N.C., 42015 Correggio (RE) (IT)
(72) Inventor: Gobbi, Luciano, 42015, Correggio RE (IT)
(74) Representative: Modiano, Micaela Nadia

(57) **Abstract**

A carrier (1) for birds and small animals, comprising a crate (2) for containing at least one animal which is closed by a removable lid (3), and at least one tray (11), which is accommodated within the crate (2) and is associated detachably therewith, the tray (11) forming at least one containment compartment (V).

## Description

The present invention relates to a carrier for birds and small animals, where the term "carrier" references a container used to carry animals of small size.

Wooden carriers for birds and small animals are known which are constituted by a crate for containing the animals which is closed in an upper region by a lid of the removable type and is provided with a grip handle.

Animals are placed in and taken out through the upper opening of the crate or through appropriately provided lateral openings which are formed in the crate and are provided with closure doors.

In the closed configuration, the carrier forms a compartment for containing the animal which is closed on all sides and is connected to the outside environment exclusively by means of ventilation slots provided in the walls of the crate or in the lid.

At the end of each use, the carrier and in particular the crate for containing the animals undergo cleaning treatments.

These known types of carrier are not free from drawbacks, including the fact that they are scarcely hygienic and are difficult to clean.

The containment crate in fact has regions which are difficult to reach with cleaning means; moreover, since it is made of wood, it cannot be subjected to adequate sanitizing treatments.

Another drawback of known carriers is that they are provided with a compartment for containing animals which is confined and closed and hinders both the viewing of the animals contained therein from the outside and adequate exposure to light and ventilation of said animals.

For these reasons, the use of known carriers is disadvantageously limited only to the transport of animals.

It is noted in particular that if the animals contained in the carrier must be put on display for example at an exhibition or if it is necessary, during transport, to extend their stay in a same place, it is necessary to resort to the use of appropriately provided cages, which are provided with larger containment spaces which are correctly lit and ventilated and into which they are transferred so as to allow both adequate living conditions for said animals and the possibility to view them from the outside.

The aim of the present invention is to eliminate the above mentioned drawbacks of known carriers, by providing a carrier for birds and small animals which has improved hygiene and allows to facilitate the cleaning operations.

Within this aim, an object of the present invention is to provide a carrier which is versatile and flexible in use and allows to eliminate the use of auxiliary cages into which the animals are to be transferred for example in the case of exhibitions or prolonged stays.

Within this aim, another object of the present invention is to provide a carrier for birds and small animals having a structure which is simple, relatively easy to provide in practice, safe in use, effective in operation, and has a relatively low cost.

This aim and these and other objects which will become better apparent hereinafter are achieved by the present carrier for birds and small animals, which comprises a crate for containing at least one animal which is closed by a removable lid and is characterized in that it comprises at least one tray, which is accommodated within the crate and is associated detachably therewith, the tray forming at least one compartment for containing the animal.

Further characteristics and advantages of the present invention will become better apparent from the following detailed description of a preferred but not exclusive embodiment of a carrier for birds and small animals, illustrated by way of non-limiting example in the accompanying drawings, wherein:

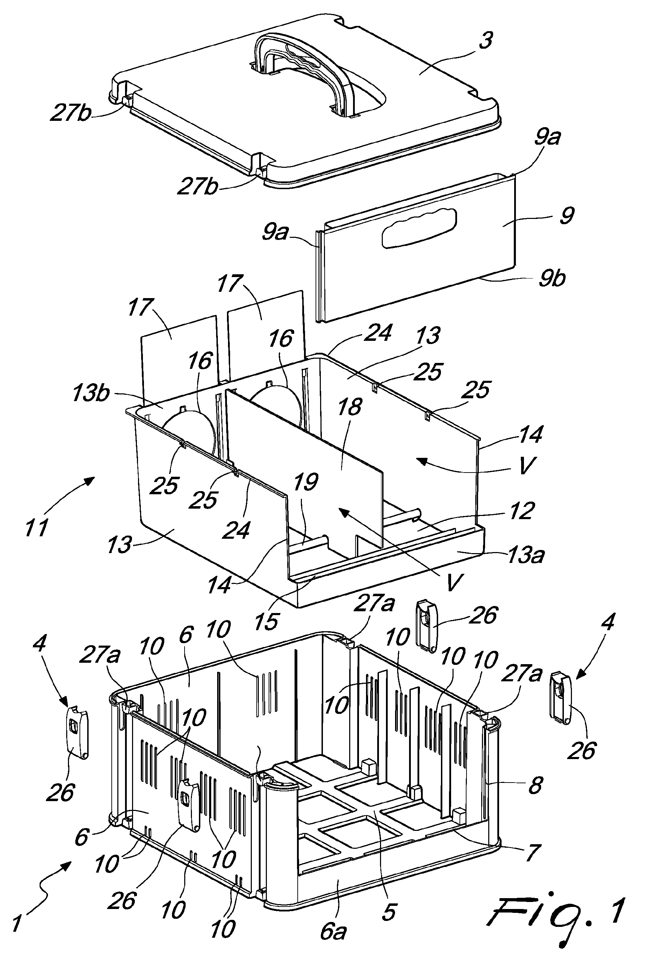

Figure 1 is an exploded perspective view of a carrier according to the invention;

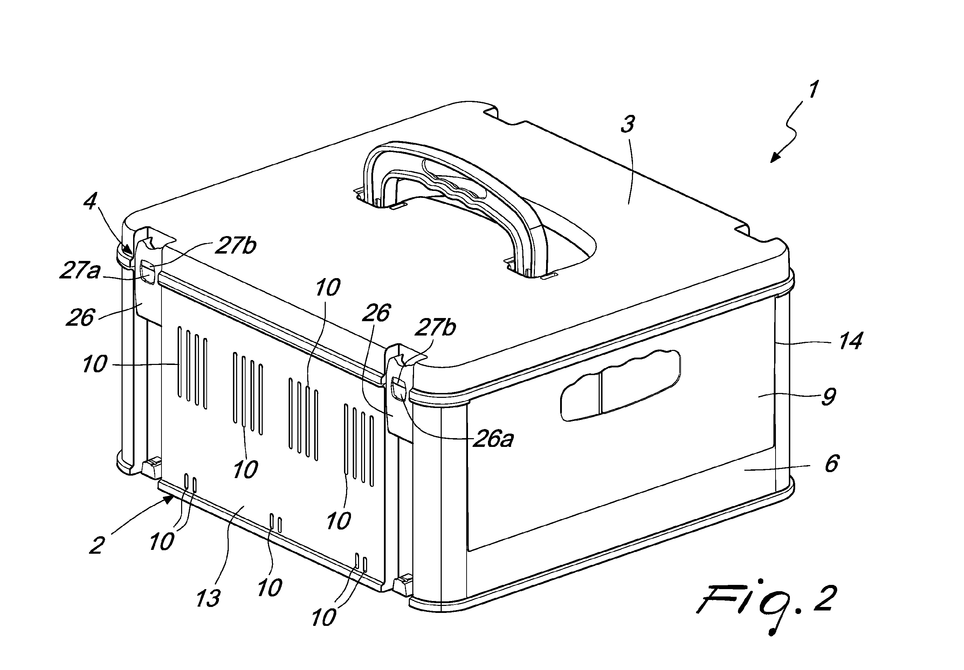

Figure 2 is a perspective view of the carrier according to the invention, in the closed configuration for carrying an animal;
Figure 3 is a perspective view of the tray of the carrier according to the invention, provided with closure grilles so as to form a cage;
Figure 4 is a perspective view of an alternative embodiment of the tray of the carrier according to the invention, provided with closure grilles so as to form a cage;
Figure 5 is a perspective view of another alternative embodiment of the tray of the carrier according to the invention, with a telescopic closure grille in the lowered configuration;
Figure 6 is a perspective view of the tray of Figure 5, with the closure grille in the raised configuration.

With reference to the figures, the reference numeral 1 generally designates a carrier for birds and small animals according to the invention.

The carrier 1 comprises a containment crate 2 of the type with an open top, with which it is possible to associate detachably a closure lid 3, means 4 for temporarily fixing the lid 3 to the crate 2 being provided.

The crate 2 comprises a bottom 5 which is closed on its sides by side walls 6; on one side wall 6a there is an opening 7, on the sides of which guiding means 8 for the sliding of corresponding edges 9a of a closure element 9 are provided.

One or more ventilation slits 10 are formed in the side walls 6.

At least one tray 11 is accommodated detachably within the crate 2 and forms one or more compartments V for containing at least one animal.

The tray 11 has an open top and comprises a base 12, which in the assembled configuration of the carrier 1 is substantially parallel to the bottom 5 and is closed at its sides by complementary walls 13, which again in the assembled configuration are substantially parallel to the side walls 6, i.e., parallel to the walls 6 within ordinary tolerances.

A cutout 14 which corresponds to the opening 7 is formed on a complementary wall 13a, which in the assembled configuration is arranged at the side wall 6a.

One or more exits 16, for example two circular exits, for the passage of the animal contained in the tray 11 are formed in the complementary wall 13b, which lies opposite the cutout 14, and are provided with respective closure doors 17 of the guillotine type.

A partition 18 is arranged within the tray 11 and divides the inside of the tray 11 into a plurality of compartments V for containing a respective animal.

Conveniently, the partition 18 is arranged in a substantially central position which is perpendicular to the complementary walls 13a and 13b, so as to form a pair of compartments V, each of which faces the cutout 14 and is provided with a respective exit 16.

One or more perches 19 are arranged within the tray 11.

In the embodiment shown in the accompanying figures, the perches 19 are raised with respect to the base 12 and are parallel to the complementary walls 13a and 13b.

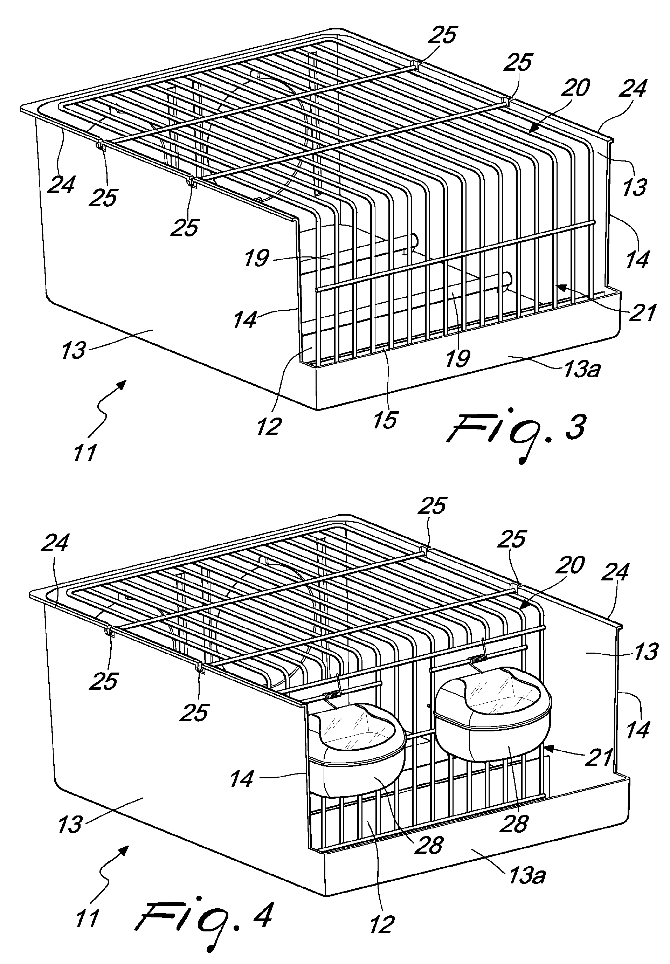

The carrier 1 further comprises a first grille 20 for upward covering of the tray 11 and a second grille 21 for closing the cutout 14, which is preferably provided monolithically with the first grille 20. In a possible embodiment, shown in Figure 3, the lower edge of the second grille 21 can be inserted removably within a slot 15 which is formed at the lower edge of the cutout 14. One or more troughs 28 can be arranged on the second grille 21 within the tray 11.

In an alternative embodiment, shown in Figure 4, the second grille 21 is offset toward the inside of the tray 11 with respect to the slot 15, so that the lower edge rests on the base 12. In this case, the troughs 28 are arranged outside the second grille 21 and are contained within the tray 11.

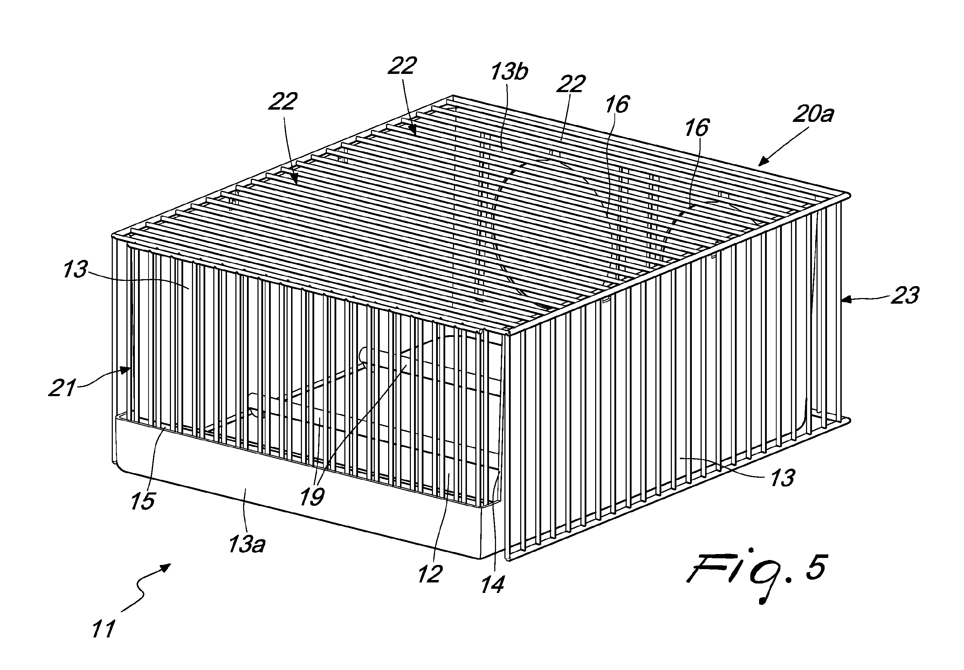

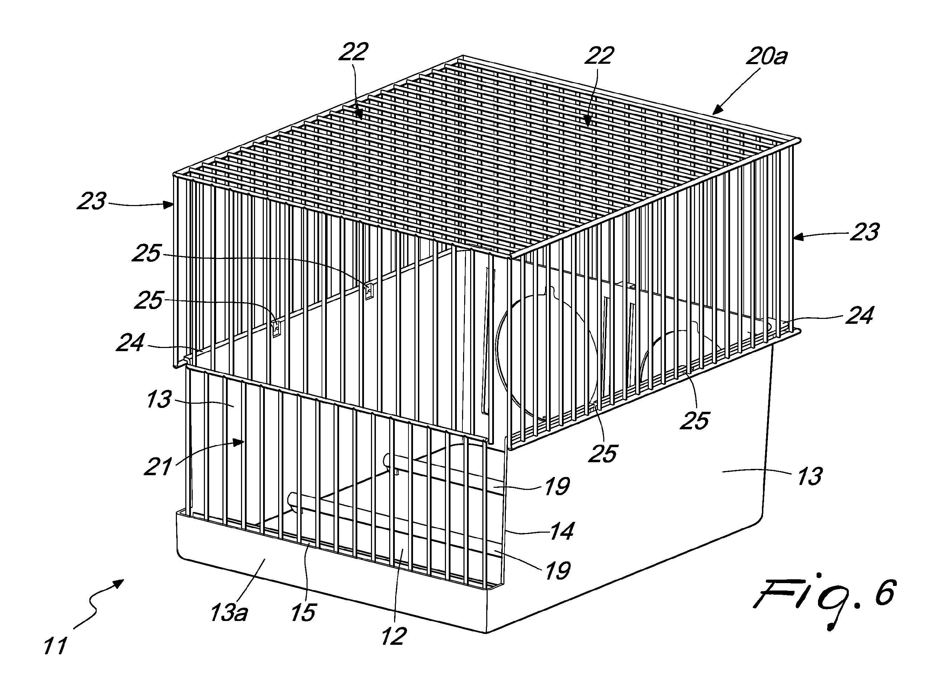

In a preferred embodiment, shown in Figures 5 and 6, the first grille 20a for the upward closure of the tray 11 and the second grille 21 for closing the cutout 14 are mutually disengaged and the first grille 20a is cap-shaped and is associated with the tray 11 so that it can slide telescopically. The first grille 20a comprises a grille 22 for covering the top of the tray 11 and grille-like side walls 23 which protrude from the edges of the covering grille 22 at right angles thereto and toward the base 12.

The first grille 20a can move between a lowered configuration, shown in Figure 5, in which the grille-like side walls 23 are superimposed externally with respect to the complementary walls 13, and a raised configuration, shown in Figure 6, in which the grille-like side walls 23 lie above the complementary walls 13 and extend them.

Along at least one portion of the upper edge of the complementary walls 13 there is a lip 24, folded toward the outside of the tray 11, for stopping the sliding of the first grille 20a from the lowered configuration to the raised one. In order to retain the first grille 20a in the raised configuration, there are locking means, for example pins, not shown in the figure, which can be inserted in one or more slots 25 which are formed along the upper edge of the complementary walls 13 and prevent, by constituting an obstacle, the sliding of the first grille 20a with respect to the tray 11.

In both configurations of the first grille 20a, the second grille 21 closes the cutout 14 formed in the complementary wall 13a.

In a further embodiment, not shown in the figures, the invention may further have a grating which can be inserted detachably within the tray 11. Such grating rests, for example by way of feet, on the base 12, with respect to which it is parallel and raised, allowing the residues of food and/or excrement, by passing through the meshes with which it is provided, to fall onto the base 12, so that the animals contained in the tray 11 can rest on the clean surfaces formed by said grating.

The means 4 for temporarily fixing the lid 3 on the crate 2 comprise one or more locking elements 26, which can be coupled by snap action with one or more pairs of retention teeth 27a and 27b, which are formed respectively on the upper edge of the side walls 6 of the crate 2 and on the edge of the lid 3.

The lower surface of the bottom 5 and the upper surface of the lid 3 comprise mutual coupling means, not shown, which are constituted for example by a particular contour or by an interlocking coupling for stacking the carrier 1 together with other carriers.

In a preferred embodiment, the crate 2, the lid 3, the closure element 9 and the tray 11 are made of plastic material.

The operation of the present invention is as follows. After inserting the tray 11 within the crate 2, by arranging the cutout 14 at the opening 7 provided in the side wall 6a, and after inserting one or more animals therein, it is possible to close the carrier by inserting in the sliding guides 8 the closure element 9, closing the entire assembly with the lid 3, which is fixed to the crate 2 by way of the locking elements 26 of the pairs of retention teeth 27.

At the end of the use of the carrier, the carrier can be cleaned by removing from the crate 2 the tray 11 and by removing from its interior the animals contained therein so as to be able to proceed with the process of sanitizing the tray 11 alone, separately from the other components of the carrier 1.

The carrier 1 can be used as a cage for example for displaying animals at exhibitions, and for this purpose the grille-like body constituted by the first upper covering grille 20 and by the second grille 21 for closing the cutout 14 is fitted detachably on the tray 11.

If one wishes to increase the space available to the animals contained in the tray 11, the cutout 14 is closed by the second grille 21 and the first grille 20a is fitted on the tray 11, being able to slide telescopically with respect to the tray 11. By arranging the first grille 20a in the raised configuration, the space available to the animals contained in the tray 11 is increased.

In practice it has been found that the described invention achieves the intended aim and objects.

The carrier according to the invention allows to perform cleaning operations simply and quickly by way of the presence of the detachable tray, which lines the inside of the containment crate and can be cleaned separately and easily. The carrier according to the invention is versatile and flexible in use; since it always uses detachable grill-like covers, it can be used as a cage without requiring the use of auxiliary cages or containers.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

The disclosures in Italian Patent Application No. MO2006A000228 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A carrier for birds and small animals, comprising a crate for containing at least one animal which is closed by a removable lid, **characterized in that** it comprises at least one tray, which is accommodated within said crate and is associated detachably therewith, said tray forming at least one compartment for containing said animal.

2. The carrier according to claim 1, **characterized in that** said crate is of the open-top type and comprises a bottom which is closed on its sides by a side wall in which at least one opening is formed, a closure element for said opening being provided which is associated detachably with said side wall.

3. The carrier according to claim 2, **characterized in that** said side wall comprises guiding means for the sliding of said closure element.

4. The carrier according to one or more of the preceding claims, **characterized in that** it comprises at least one ventilation slit which is formed in said crate or in said lid.

5. The carrier according to one or more of the preceding claims, **characterized in that** said tray has an open top and comprises a base which is suitable to be arranged substantially parallel to said bottom and is closed at its sides by a complementary wall, which is suitable to be arranged substantially parallel to said side wall.

6. The carrier according to claim 5, **characterized in that** said tray comprises at least one cutout which is formed in said complementary wall substantially at said opening in the assembled configuration of said carrier.

7. The carrier according to one or more of the preceding claims, **characterized in that** said tray comprises at least one exit for said animal which is provided with a door.

8. The carrier according to claim 7, **characterized in that** said door is of the guillotine type.

9. The carrier according to one or more of the preceding claims,
**characterized in that** said tray comprises at least one partition which is suitable to form at least two of said containment compartments.

10. The carrier according to claims 9 and 6, **characterized in that** each of said compartments is connected to said cutout and is provided with a respective said exit.

11. The carrier according to one or more of the preceding claims, **characterized in that** said tray comprises at least one perch.

12. The carrier according to one or more of the preceding claims, **characterized in that** it comprises at least one upper covering grille for said tray.

13. The carrier according to one or more of claims 6 to 12, **characterized in that** it comprises at least one second grille for closing said cutout.

14. The carrier according to claim 13, **characterized in that** said second grille comprises a lower edge which can be inserted detachably in at least one slot which is formed along the lower edge of said cutout.

15. The carrier according to claim 13, **characterized in that** said second grille is offset toward the inside of said tray with respect to said slot.

16. The carrier according to claim 14, **characterized in that** it comprises a trough which is associated with said second grille within said compartment.

17. The carrier according to claim 15, **characterized in that** it comprises a trough which is associated with said second grille on the outside of said compartment.

18. The carrier according to one or more of claims 12 to 17, **characterized in that** said first grille and said second grille are mutually rigidly coupled.

19. The carrier according to one or more of claims 12 to 17, **characterized in that** said first grille is cap-shaped and is associated so that it can slide telescopically with said tray so that it can move between a lowered configuration, in which it covers the top and the complementary wall of said tray, and a raised configuration, in which it covers the top of said tray and extends said complementary wall.

20. The carrier according to claim 19, **characterized in that** a lip is formed along at least one portion of the upper edge of said complementary wall and is folded toward the outside of said tray in order to stop the sliding of said first grille.

21. The carrier according to claim 19 or 20, **characterized in that** it comprises means for locking said first grille in said raised configuration.

22. The carrier according to claim 21, **characterized in that** said locking means comprise at least one pin, which can be inserted in at least one slot which is formed in said complementary wall, said pin preventing, by constituting an obstacle, the sliding of said first grille.

23. The carrier according to one or more of the preceding claims, **characterized in that** it comprises at least one grating which can be inserted detachably in said tray and is suitable to be arranged substantially parallel and raised with respect to said base by way of supporting means.

24. The carrier according to one or more of the preceding claims, **characterized in that** it comprises means for temporarily fixing said lid to said crate.

25. The carrier according to claim 24, **characterized in that** said temporary fixing means comprise at least one locking element, which can be coupled by snap action to a corresponding pair of retention teeth which are formed respectively on said crate and on said lid.

26. The carrier according to one or more of the preceding claims, **characterized in that** the lower surface of said bottom and the upper surface of said lid comprise mutual coupling means which allow the stacking of said carrier with other carriers.

27. The carrier according to one or more of the preceding claims, **characterized in that** at least one among said crate, said lid, said closure element and said tray is made of plastic material.
